# EUROPÄISCHE PATENTSCHRIFT

(11) **EP 1 616 451 B1**
(45) Veröffentlichungstag und Bekanntmachung des Hinweises auf die Patenterteilung: **11.03.2009**
(21) Anmeldenummer: 04726438.7
(22) Anmeldetag: 08.04.2004
(51) Int. Cl.: H04Q 9/00, G01D 4/00

(54) **VEBRAUCHSDATENANORDNUNG UND TRAGBARER DATENTRÄGER**
CONSUMPTION DATA DEVICE AND PORTABLE DATA CARRIER
SYSTEME DE DONNEES DE CONSOMMATION ET SUPPORT DE DONNEES PORTATIF

(30) Priorität: 16.04.2003 DE 20306150 U; 20.01.2004 DE 102004003016
(43) Veröffentlichungstag der Anmeldung: 18.01.2006
(73) Patentinhaber: Wollny, Christiane, 69226 Nussloch (DE)
(72) Erfinder: Wollny, Christiane, 69226 Nussloch (DE)
(74) Vertreter: Ostermann, Thomas
(86) Internationale Anmeldenummer: PCT/DE2004/000757
(87) Internationale Veröffentlichungsnummer: WO 2004/093026

(56) Entgegenhaltungen:
- EP-A- 1 096 454
- WO-A-00/73742
- WO-A-01/03058
- DE-A- 10 133 366
- DE-U- 20 100 158
- DE-U- 29 910 829
- GB-A- 2 107 093
- US-A- 5 485 150
- PATENT ABSTRACTS OF JAPAN Bd. 2003, Nr. 12, 5. Dezember 2003 (2003-12-05) & JP 2004 005317 A (MATSUSHITA ELECTRIC IND CO LTD), 8. Januar 2004 (2004-01-08)

## Beschreibung

Die Erfindung betrifft die Verwendung eines tragbaren Datenträgers, der einen Halbleiterbaustein mit einem Speicher und einer Antenne aufweist.

Zur Ermittlung von Verbrauchsdaten einer Heizung in Gebäuden oder Liegenschaften ist es bekannt, elektronische Heizkostenverteiler an den entsprechenden Heizkörpern zu befestigen. Die Heizkostenverteiler können mit einem wärmeleitenden Unterteil an dem Heizkörper befestigt sein und weisen eine transparente Ampulle auf, in der eine Measflüssigkeit in Abhängigkeit von der Temperatur verdunstet. Die Menge der verdunsteten Messflüssigkeit kann durch Ablesen von Skalenstrichen bestimmt werden. In vermieteten Häusern und Wohnungen gestaltet sich die Ermittlung des wärmeverbrauchs als relativ aufwändig, da in regelmäßigen Zeitabständen (jährlich) Mitarbeiter einer Hausverwaltungsgesellschaft in die Wohnung oder das Haus kommen müssen, um den Wärmeverbrauch abzulesen. Wollte der Vermieter oder Mieter die Kosten für eine solche Ablesung einsparen, bestünde die Möglichkeit, dass der Mieter selbst die Ablesung vornimmt. Nachteilig hieran ist jedoch, dass die Gefahr von Manipulationen oder Falschmitteilungen besteht.

Aus der DE 201 00 158 U1 sind sogenannte Smart-Labels bekannt, die einen Halbleiterbaustein mit einem Speicher sowie eine Antenne aufweisen. Sie dienen als Identifikations- und Sicherheitselemente zur Massenidentifizierung von Gegenständen und werden mittels eines selbstklebenden Trägers als dünne, flexible Klebeetiketten auf die entsprechenden Gegenstände geklebt. Die Identifikationsdaten sind in dem Speicher des Halbleiterbausteins gespeichert und können über die Antenne mit einem externen Schreib/Lesegerät ausgetauscht werden. Diese bekannten Smart-Labels sind nicht für den Einsatz zur Bereitstellung von Verbrauchsdaten in einem Gebäude oder einer Liegenschaft bestimmt.

Aus der US 5 485 150 A ist eine Anordnung zum automatischen Bereitstellen von in einem Gebäude anfallenden Verbrauchsdaten bekannt. Die Anordnung umfasst einen Verbrauchszähler zum Ermitteln von einem Verbraucher zugeordneten Verbrauchsmesswerten. Zum Auslesen der Verbrauchsmesswerte ist ein tragbares Terminal vorgesehen, das über eine elektronische Datenverarbeitung, eine Sende/Empfangseinheit sowie eine Anzeigeeinheit verfügt. Hält eine Bedienperson das tragbare Terminal in die Nähe des Verbrauchszählers, erfolgt eine automatische Übertragung der verbrauchsmesswerte von dem Verbrauchszähler in einen Speicher des tragbaren Terminals. Nachteilig an der bekannten Anordnung ist, dass das tragbare Terminal eine eigene Energieversorgung benötigt und aufgrund des Aufbaus relativ voluminös ist.

Aufgabe der vorliegenden Erfindung ist es, einen Datenträger zum automatischen Bereitstellen von in einem Gebäude oder in einer Liegenschaft anfallenden Verbrauchsdaten einerseits und einen tragbaren Datenträger andererseits anzugeben, so dass zum einen der Ableseaufwand verringert und zum anderen ein hohes Maß an Datensicherheit gewährleistet ist.

Zur Lösung dieser Aufgabe weist die Erfindung die Merkmale des Patentanspruchs 1 auf.

Der besondere Vorteil der Erfindung besteht darin, dass die von einem Verbrauchszähler ermittelten Verbrauchsmesswerte automatisch in einer manipulationssicheren Form bereitgestellt sind einerseits und eine kostensparende Übertragung derselben zu einer zentralen Abrechnungsstelle gewährleistet ist andererseits. In der zentralen Abrechnungsstelle können die Daten im Gegensatz zu derzeit manuellen Eingabe automatisch kontaktlos ausgelesen werden. Erfindungsgemäß sind die Daten in einem Verbrauchstransponder eines Datenträgers abgespeichert und mittels eines selbstklebenden Trägers an einem Verbraucher oder einem Verbrauchszähler lösbar befestigt. Vorteilhaft kann der Datenträger nach Ablauf eines vorgegebenen Zeitintervalls vom Verbraucher bzw. Verbrauchszähler entfernt und an die zentrale verrechnungsstelle versandt werden.

Aufbaubeispiele werden nachfolgend anhand der Zeichnungen näher erläutert.

Es zeigen:
- Figur 1: eine schematische Darstellung eines Verbrau- chers, an dem ein Verbrauchszähler und ein Smart-Label angebracht sind,
- Figur 2: ein Blockschaltbild eines Smart-Labels,
- Figur 3: ein Blockschaltbild eines Verbrauchsdatenspei- cherbereichs eines Speichers des Smart-Labels und
- Figur 4: eine schematische Draufsicht auf ein mit einem Transponder versehenen Dokument zum Postversand.

Eine Anordnung zum automatischen Bereitstellen von in einem Gebäude oder einer Liegenschaft anfallenden Verbrauchsdaten besteht im Wesentlichen aus einem Verbrauchszähler 1 und einem im Abstand zu dem Verbrauchszähler 1 angeordneten Verbrauchstransponder 2 (Halbleiterbaustein und Antenne). Der Verbrauchstransponder 2 (Halbleiterbaustein) ist in einem Smart-Label 3 (Etikett) untergebracht und an einer geschützten Stelle mit einem Verbraucher 4 lösbar verbunden.

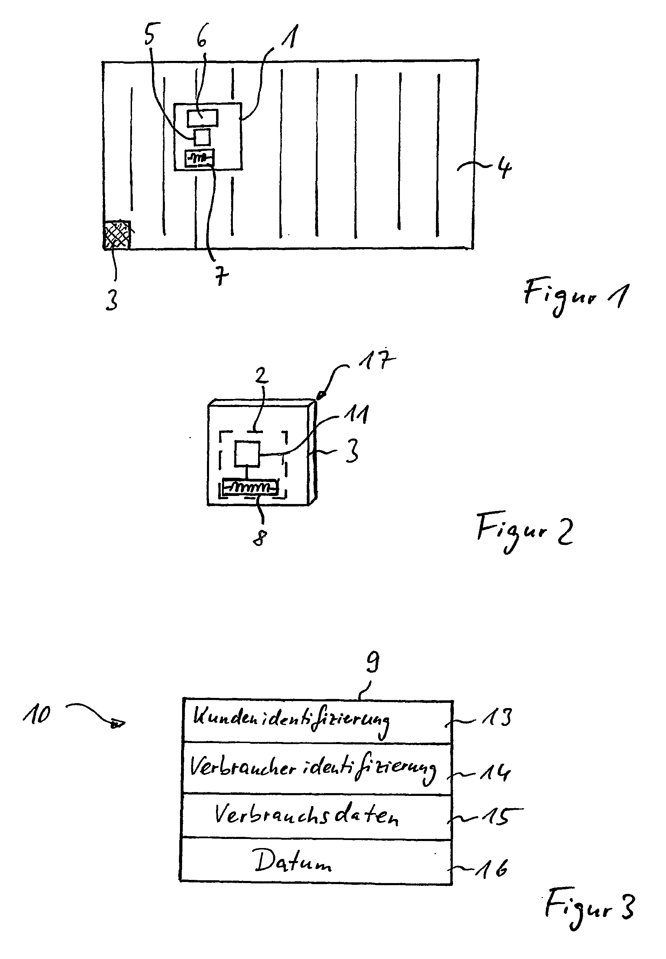

In Figur 1 ist als Verbraucher 4 ein Heizkörper einer Heizungsanlage in einem Gebäude beispielhaft dargestellt. Der Verbrauchszähler 1 ist als elektronischer Heizkostenverteiler zur Erfassung der Verbrauchseinheiten des Heizkörpers 4 ausgebildet und weist einen Chip 5 mit einem Speicher sowie eine Anzeige 6 zur Darstellung der Verbrauchseinheiten auf.

In dem elektronischen Heizkostenverteiler 1 ist eine Schreib-/Leseeinrichtung 7 integriert, die in der Lage ist, die von dem elektronischen Heizkostenverteiler 1 ermittelten Verbrauchsmesswerte mittels elektromagnetischer Wellen an eine Antenne 8 des Smart-Labels 3 zu senden. Die übertragenen Verbrauchsmesswerte werden dann als ein Verbrauchsdatensatz 9 in einem Verbrauchsdatenspeicherbereich 10 eines Speichers 11 des Tansponders 2 oder des Chips abgespeichert. Der Halbleiterbaustein wird im Wesentlichen durch den Speicher 11 gebildet. Alternativ kann der Halbleiterbaustein auch einen Mikroprozessor aufweisen. Die Verbrauchsdaten werden derart aufbereitet, dass in dem Verbrauchsdatenspeicher 10 zum einen eine Kundenidentifizierung 13, eine Verbraucheridentifizierung 14, die Verbrauchsdaten 15 sowie das Datum 16 abgespeichert sind. Die Kundenidentifizierung 13 kann beispielsweise der Name des Mieters der Wohnung beinhalten. Die Verbraucheridentifizierung 14 kann die Nummer des Heizkörpers 4 beinhalten. Die Verbrauchsdaten 15 enthalten die Verbrauchsmesswerte oder Verbrauchseinheiten. Das Datum 16 gibt an, wann die Verbrauchsmessung durchgeführt worden ist.

In einem weiteren Speicherbereich des Halbleiterbausteins 2 kann ein Verbraucherprogramm abgespeichert sein, so dass die Verbrauchsdatensätze derart weiterverarbeitet bzw. aufsummiert werden, dass zu einem vorgegebenen Stichtag oder in einem vorgegebenen Speicherintervall (12-Monatsspeicherung) die Verbrauchsdaten aufintegriert werden. Die Verbrauchsdaten liegen vorteilhaft dann in einer solchen Form vor, dass sie auf einfache Weise in ein Abrechnungsprogramm eines zentralen Dienstleistungsabrechnungsunternehmens integriert werden können.

Das Smart-Label 3 weist einen selbstklebenden Träger 17 auf, mittels dessen es an den Heizkörper 4 lösbar befestigt werden kann. Vorzugsweise wird das Smart-Label 3 auf den Verbrauchszähler 1 aufgeklebt. Wie aus Figur 1 zu ersehen ist, könnte man das Smart-Label 3 auch an einer geschützten Stelle des Heizkörpers 4, alternativ an einer vorgegebenen Stelle desselben, angeordnet.

Nach einer alternativen nicht dargestellten Aufbauform können die Antenne 8 und die Schreib-/Leseeinrichtung 7 des Heizkörpers 4 auch in Frequenzbereichen arbeiten, die es erlauben, das Smart-Label 3 beispielsweise an einer Raumwand zu befestigen.

Nach einer bevorzugten Aufbauform werden die Verbrauchsdaten von dem Verbrauchszähler 1 zu dem Smart-Label 3 verschlüsselt übertragen und dort verschlüsselt abgespeichert. Zu diesem Zweck weist der ASIC-Chip des Verbrauchszählers 1 ein Verschlüsselungsprogramm auf mit einem geheimen Schlüssel. In dem Smart-Label 3 ist kein Schlüssel gespeichert. Einen weiteren Schlüssel zum Entschlüsseln des Verbrauchsdatensatzes bzw. der Verbrauchsdaten weist lediglich die zentrale Abrechnungsstelle auf, an die der Verbrauchsdatensatz gesandt wird. Die Anzeige der Verbrauchseinheiten für den Mieter wird bereits durch die Anzeige 6 des Verbrauchszählers 1 gewährleistet. Dadurch, dass das Smart-Label 3 keinen Schlüssel enthält, ist die Anordnung sicher vor Angriffen durch einen Fälscher. Die Anzeige 6 ermöglicht es, dem Mieter, sich den Verbrauch zum Stichtag zu notieren.

Zur Verbrauchsabrechnung wird das Smart-Label 3 beispielsweise nach einem 12-Monatszeitraum von dem Heizkörper 4 durch den Mieter entfernt und per Postversand an die zentrale Abrechnungsstelle verschickt. In der Abrechnungsstelle werden die Smart-Labels 3 eines Kunden gesammelt, die Verbrauchsdatensätze in einen zentralen Rechner ausgelesen und weiterverarbeitet, so dass eine Verbrauchsabrechnung für den Kunden (Mieter) erstellt werden kann. Die Smart-Labels 3 können beispielsweise jedem Heizkörper 4 zugerordnet sein und/oder einem elektronischen Warm- und Kaltwasserzähler und/oder einem elektronischen Stromzähler bzw. einem beliebigen Medienzähler.

Nach einer alternativen Aufbauform können die ermittelten und im Smart-Label 3 abgespeicherten Verbrauchsdaten auch mittels einer nicht dargestellten Schreib-/Leseeinrichtung eines Personalcomputers des Kunden oder einer damit beauftragten Stelle ausgelesen werden und dann via Internet an die zentrale Abrechungsstelle übertragen werden. In diesem Fall fallen keine Postversandgebühren an.

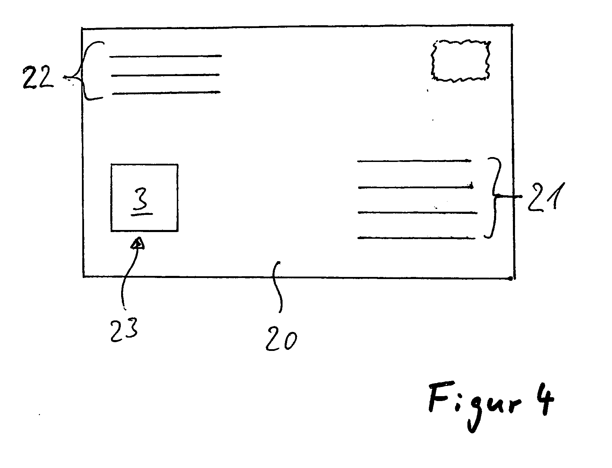

Nach einer weiteren Aufbauform gemäß Figur 4 kann der Transponder 2 auch in ein zum Postversand vorgesehenen Dokument 20 integriert sein. Das Dokument 20 kann beispielsweise als eine Postkarte ausgebildet sein, auf der eine Adresse 21 der Abrechnungsstelle vorab aufgedruckt ist. Auf einem weiteren dafür vorgesehenen Feld kann eine Adresse 22 des Absenders eingetragen werden oder bereits vorab eingetragen sein. Zur Vermeidung einer Manipulation des Smart-Labels 3 ist dasselbe über eine Klebefolie auf dem Dokument 20 aufgebracht, derart, dass bei unerlaubtem Entfernen des Smart-Labels 3 von dem Dokument 20 eine zueinandergekehrte Seite des Smart-Labels 3 und/oder des Feldes 23 beeinträchtigt bzw. zerstört wird. Vorteilhaft kann das Smart-Label auch innig mit dem Dokument 20 verbunden sein, so dass ein Ablösen des Smart-Labels 3 nur mit sehr großem Aufwand möglich ist.

Das Auslesen der Verbrauchsdaten aus dem elektronischen Verbrauchszähler 1 des Verbrauchers 4 erfolgt folgendermaßen. Das Dokument 20 mit dem fest verbundenen Transponder 2 wurde dem Nutzer des Gebäudes, beispielsweise dem Mieter einer Wohneinheit, per Post zugesandt. In einem vorgegebenen Abrechnungszeitraum oder -punkt hält der Mieter das Dokument 20 nacheinander in die Nähe des elektronischen Verbrauchszählers 1 der Verbraucher 4 seiner Wohneinheit, so dass nacheinander die Verbrauchsdaten kontaktlos von den Verbrauchszählern 1 des jeweiligen Verbrauchers 4 in den dafür vorgesehenen Verbrauchsdatenspeicherbereich 10 des TRansponders 2 übertragen werden. Der erfolgreiche Übertragungsvorgang wird durch ein akustisches und/oder visuelles Signal des Verbrauchszählers 1 der Bedienperson angezeigt. Dadurch, dass jedem Verbraucher bzw. Verbrauchszähler 1 eine Kennung zugeordnet ist, wird verhindert, dass bei einem mehrmaligem Ausleseversuch eine unerwünschte Aufsummierung von Verbrauchsdaten in dem Transponder 2 erfolgt.

Nach Beendigung des Auslesevorganges kann das Dokument 20 per Postversand an die auf dem Dokument angegebene Adresse 21 der Abrechnungsstelle gesandt werden. Die Adresse des Absenders 22 kann vorab oder nachträglich auf dem Dokument 20 eingetragen werden. Da in dem Smart-Label 3 eine Kundenidentifizierung enthalten ist, kann nach Auslesen der Verbrauchsdaten in der Abrechnungsstelle einfach eine Zuordnung derselben zu dem Kunden erfolgen. In der Abrechnungsstelle kann dann eine Aufsummierung der einzelnen abgespeicherten Verbrauchsdaten erfolgen und selbsttätig ein an den Kunden zu richtendes Abrechnungsschreiben bzw. den Einzug der entsprechenden Abrechnungsgebühren veranlasst werden.

Nach einer nicht dargestellten Variante kann der oben beschriebene als Smart-Label ausgeführte tragbare Datenträger auch als eine Chipkarte ausgebildet sein, die über eine Kontaktschnittstelle verfügt. Diese Chipkarte enthält zum einen eine Antenne 8, so dass sie kontaktlos die Verbrauchsdaten aus dem elektronischen Verbrauchszähler 1 herauslesen kann. Zum anderen enthält sie Kontaktflächen an einer Längsseite, so dass die in dem gemeinsamen zugreifbaren Speicher 11 abgespeicherten Verbrauchsdaten mittels eines Kartenlesegerätes und eines Computers über ein Datennetz, wie beispielsweise das Internet, direkt an die Abrechnungsstelle übertragen werden können. Hierdurch kann eine schnellere Zurverfügungstellung der Verbrauchsdaten gewährleistet werden. Die Chipkarte wird den jeweiligen Kunden von der Abrechnungsstelle zur Verfügung gestellt, damit in periodischen Zeitintervallen eine Auslesung und Übertragung der Verbrauchsdaten an die Abrechnungsstelle erfolgen kann.

Dadurch, dass die Verbrauchsdaten verschlüsselt in dem Verbrauchsdatenspeicherbereich abgespeichert sind, dessen Schlüssel nur die Abrechnungsstelle kennt, wird sichergestellt, dass eine Manipulation der Verbrauchsdaten verhindert wird.

## Patentansprüche

1. Verwendung eines tragbaren Datenträgers, der einen Halbleiterbaustein mit einem Speicher und einer Antenne aufweist, als Verbrauchstransponder (2) mit einem Verbrauchsdatenspeicherbereich (10) zur Abspeicherung von verbrauchs- und kundenspezifischen Daten, der mittels eines selbstklebenden Trägers (17) lösbar im Bereich des Verbrauchers (4) und/oder des verbrauchszählers (1) anbringbar ist und der mit einer dem verbraucher (4) und/oder dem Verbrauchszähler (1) zugeordneten Schreib-/Leseeinrichtung (7) zwecks Übertragung von Verbrauchsdaten in Verbindung steht, so dass die Verbrauchsdaten in einem vorgegebenen zeitintervall zum Verbrauchstransponder (2) übertragbar und dort als Verbrauchsdatensatz (9) abrufbar abgespeichert sind.

## Claims

1. Use of a portable data carrier comprising a semiconductor component with a memory and an antenna as a consumption transponder (2) having a consumption data memory section (10) for storing consumption and customer specific data which is adapted to be detachably fitted in the area of a consumer (4) and/or consumption meter (1) by means of a pressure sensitive adhesive carrier (17) and which is in communication with a write/read unit (7) allocated to the consumer (4) and/or to the consumption meter (1) for transmitting consumption data such that said consumption data can be transferred to the consumption transponder (2) within a predetermined time interval and stored there to be called off as a consumption data set (9).

## Revendications

1. Utilisation d'un support de données portatif, qui présente un module semi-conducteur avec une mémoire et une antenne, en tant que transpondeur de consommation (2), avec une zone de mémorisation de données de consommation (10) pour la mémorisation de données spécifiques de consommation et de clients, qui peut être fixé, de manière amovible, dans la zone du consommateur (4) et / ou du compteur de consommation (1), au moyen d'un support autocollant (17), et qui est en relation avec un système d'écriture / de lecture (7), associé au consommateur (4) et / ou au compteur de consommation (1) aux fins du transfert de données de consommation, de sorte que les données de consommation puissent être transférées au transpondeur de consommation (2), au cours d'un intervalle de temps prédéterminé, et y mémorisées en tant que jeu de données de consommation (9) pouvant être extraites.
